# DEMANDE DE BREVET EUROPEEN

(11) **EP 0 935 402 A1**
(43) Date de publication de la demande: **11.08.1999**
(21) Numéro de dépôt: 99400248.3
(22) Date de dépôt: 04.02.1999
(51) Int. Cl.: H04Q 7/38

(54) **Procédé de coopération entre entités d'un réseau cellulaire de radiocommunications mobiles, lors de transferts de communications inter-cellulaires**

(30) Priorité: 06.02.1998 FR 9801443
(71) Demandeur: ALCATEL, 75008 Paris (FR)
(72) Inventeur: Roberts, Michael, 92200 Neuilly sur Seine (FR)
(74) Mandataire: El Manouni, Josiane

(57) **Abrégé**

Procédé de coopération entre entités d'un réseau cellulaire de radiocommunications mobiles, pour l'allocation de ressources radio lors de transferts de communications inter-cellulaires, caractérisé en ce que, lors d'une demande de transfert de communication d'une cellule dite cellule serveuse contrôlée par une entité de ce réseau dite entité serveuse (BSCs), vers une cellule dite cellule cible contrôlée par une entité de ce réseau distincte de ladite entité serveuse et dite entité cible (BSCc), en vue de déterminer si un transfert vers cette cellule cible s'avère possible, ladite cellule cible étant dite cellule rejetée dans le cas où un tel transfert ne s'avère pas possible, ladite entité serveuse informe (INF, INF') ladite entité cible de paramètres utiles pour fixer les conditions dans lesquelles ladite cellule cible est à considérer comme une cellule rejetée.

## Description

La présente invention concerne d'une manière générale les systèmes cellulaires de radiocommunications mobiles, plus particulièrement la gestion des ressources radio dans ces systèmes, et plus particulièrement encore la gestion des ressources radio dans ces systèmes lors de transferts de communications inter-cellulaires (appelés aussi "handovers").

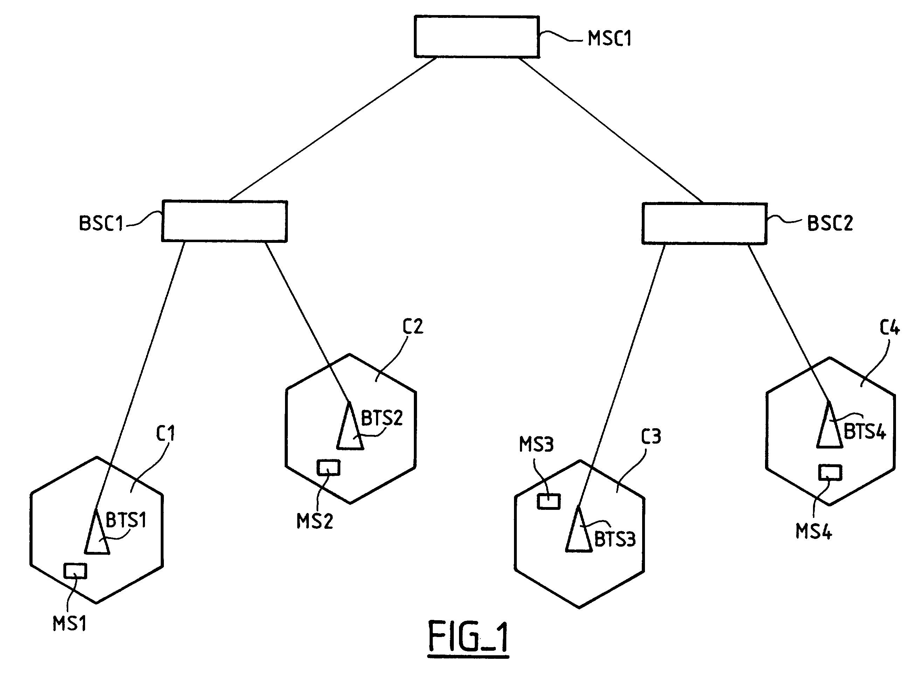

On rappelle, en relation avec la figure 1, l'architecture générale d'un système cellulaire de radiocommunications mobiles, tel que notamment le système GSM (pour "Global System for Mobile communications"). Un tel système comporte essentiellement:
- un ensemble de stations de base, appelées aussi BTS (pour "Base Transceiver Station"), telles que celles notées BTS1, BTS2, BTS3 et BTS4, chacune de ces stations de base étant, dans l'exemple illustré, affectée à une cellule notée respectivement C1, C2, C3, et C4 (d'autres exemples étant bien entendu possibles, où une même BTS serait affectée à plusieurs cellules), et ces stations de base étant en relation avec des stations mobiles, telles que MS1, MS2, MS3, MS4, situées dans ces cellules,
- un ensemble de contrôleurs de stations de base, appelés aussi BSC (pour "Base Station Controller"), tels que ceux notés BSC1 et BSC2, chacun de ces BSC contrôlant, du point de vue de la gestion des ressources radio, un sous-ensemble de cellules, le contrôleur de stations de base BSC1 contrôlant dans l'exemple illustré les cellules C1 et C2, et le contrôleur de stations de base BSC2 contrôlant dans cet exemple les cellules C3 et C4,
- un ensemble de centres de commutation mobile, appelés aussi MSC ("pour Mobile Switching Center"), tels que celui noté MSC1, chacun de ces MSC étant en relation avec des réseaux extérieurs tels que notamment les réseaux PSTN (pour "Public Switched Telephone Network") ou ISDN (pour "Integrated Services Digital Network"), et contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2.

Dans un tel système, une décision d'effectuer un transfert de communication est prise par le réseau sur la base d'un certain nombre de paramètres, tels que notamment des résultats de mesures sur des signaux radio pour la cellule serveuse actuelle , et pour des cellules voisines de la cellule serveuse actuelle.

La cellule vers laquelle la communication est à transférer, dite nouvelle cellule serveuse, est plus précisément choisie, parmi un ensemble de cellules dites cellules candidates (déterminées par le réseau, parmi lesdites cellules voisines, sur la base desdits résultats de mesure), de la manière suivante.

Un transfert de communication est tout d'abord demandé vers la meilleure des cellules candidates. Dans le cas où un tel transfert s'avère possible, cette meilleure cellule candidate constitue la nouvelle cellule serveuse. Dans le cas où un tel transfert ne s'avère pas possible, un transfert est demandé vers la cellule candidate suivante, dans l'ordre de préférence de ces cellules candidates, et ainsi de suite.

Une cellule candidate vers laquelle un transfert est demandé est aussi appelée cellule cible.

Une cellule cible vers laquelle un transfert demandé ne s'avère pas possible est aussi dite cellule rejetée. Une cellule cible peut ainsi être rejetée notamment parce que la station mobile ne réussit pas à établir une liaison avec le réseau dans cette cellule, ou encore parce qu'aucune ressource radio n'est disponible dans cette cellule, du fait d'une surcharge de trafic, ou encore parce qu'une opération de contrôle ou de maintenance est en cours dans cette cellule, cette liste n'étant évidemmment pas limitative.

Dans le cas de cellule cible contrôlée par le même BSC que la cellule serveuse actuelle, ce qui correspond par exemple, sur la figure 1, à une demande de transfert de communication de la cellule C1 vers la cellule C2, ou de la cellule C3 vers la cellule C4 (un tel transfert étant aussi appelé transfert interne, ou transfert intra-BSC), le BSC concerné est en mesure de déterminer lui-même, de manière interne, si un transfert est ou non possible vers cette cellule cible, c'est-à-dire s'il s'agit ou non d'une cellule rejetée, puisque ce BSC gère les ressources radio pour ces deux cellules.

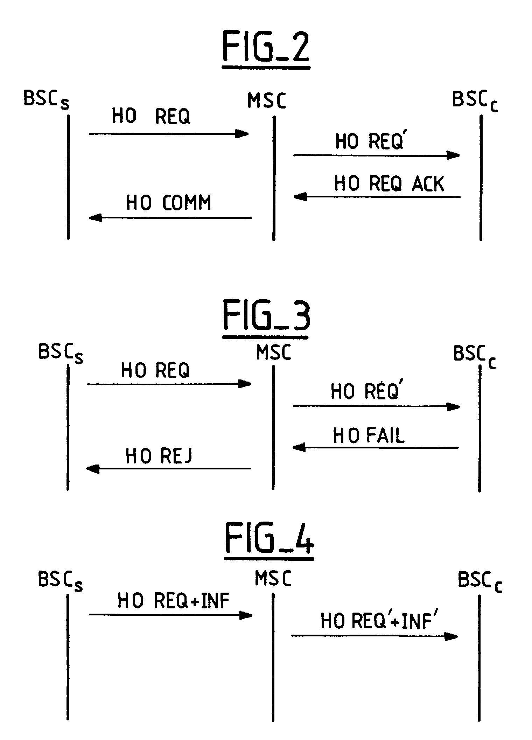

Dans le cas de cellule cible contrôlée par un BSC, dit BSC cible, autre que le BSC dit BSC serveur actuel (ou plus simplement dans ce qui suit BSC serveur) contrôlant la cellule serveuse actuelle (dite aussi plus simplement dans ce qui suit cellule serveuse), ce qui correspond par exemple, sur la figure 1, à une demande de transfert de communication de l'une ou l'autre des cellules C1 et C2 vers l'une ou l'autre des cellules C3 et C4, (un tel transfert étant aussi appelé transfert externe, ou transfert inter-BSC), le BSC serveur n'est pas en mesure de déterminer lui-même, de manière interne, si un transfert est ou non possible vers cette cellule cible, c'est-à-dire s'il s'agit ou non d'une cellule rejetée, et la procédure est alors celle rappelée sur l'une ou l'autre des figures 2 et 3, à savoir:
- le BSC serveur, noté BSCs, adresse tout d'abord au MSC un message de requête de "handover" (message noté ici HO REQ, pour "Handover Required" ),
- le MSC adresse à son tour un message du même type (message noté ici HO REQ', pour "Handover Request") au BSC cible, noté BSCc,
- le BSC cible, après avoir déterminé de manière interne si un tel transfert est ou non possible vers cette cellule cible, c'est-à-dire s'il s'agit ou non d'une cellule rejetée, adresse au MSC, soit, dans le cas de cellule non rejetée (figure 2), un message d'accusé de réception de requête de "handover" (message noté ici HO REQ ACK, pour "Handover Request Acknowledgement") contenant lui-même un message de commande de transfert, soit, dans le cas de cellule rejetée (figure 3), un message indiquant une impossibilité d'effectuer un transfert vers cette cellule cible (message noté ici HO FAIL, pour "Handover Failure"),
- le MSC adresse à son tour au BSC serveur un message de même nature, à savoir soit un message de commande de transfert (message noté ici HO COMM, pour "Handover Command"), soit un message indiquant une impossibilité d'effectuer un transfert vers cette cellule cible (message noté ici HO REJ, pour "Handover Required Reject").

Un demande de transfert vers une cellule cible peut, dans le cas où elle reçoit une première réponse négative, être mise dans une file d'attente pour être réitérée ultérieurement, dans la limite d'une durée prédéterminée, ce qui correspond à la technique connue dite, en anglais, de "queuing". Cette technique peut cependant ne pas être appliquée de manière uniforme à toutes les communications. Par exemple il peut être décidé que ladite durée prédéterminée peut être relativement plus élevée pour une communication sortante, c'est-à-dire pour une communication émise par une station mobile, que pour une communication entrante , c'est-à-dire pour une communication reçue par une station mobile. L'invention n'est cependant pas limitée à un tel exemple, et couvre notamment l'exemple inverse où il serait décidé que ladite durée prédéterminé peut être relativement plus élevée pour une communication entrante que pour une communication sortante, ainsi que d'autres exemples de paramètres utiles pour fixer ladite durée prédéterminée, ou plus généralement pour fixer les conditions dans lesquelles une cellule cible est à considérer comme une cellule rejetée.

Il est ici posé d'une manière générale le problème que dans le cas d'un transfert externe, et dans le cas où seul le BSC serveur a connaissance de tels paramètres (ce qui est notamment le cas de paramètres constitués par la nature, entrante ou sortante, de la communication), le BSC cible risque de ne pas appliquer de manière optimale ladite technique dite en anglais de "queuing", ou plus généralement toute technique utilisant de tels paramètres pour déterminer si une cellule cible est ou non une cellule rejetée.

La présente invention vise notamment à éviter cet inconvénient, c'est-à-dire à optimiser le fonctionnement du réseau en pareil cas, et plus généralement à améliorer la coopération entre entités du réseau dans le cas de transferts de communications inter-cellulaires.

La présente invention a ainsi pour objet un procédé de coopération entre entités d'un réseau cellulaire de radiocommunications mobiles, pour l'allocation de ressources radio lors de transferts de communications inter-cellulaires, ce procédé étant essentiellement caractérisé en ce que, lors d'une demande de transfert de communication d'une cellule dite cellule serveuse contrôlée par une entité de ce réseau dite entité serveuse, vers une cellule dite cellule cible contrôlée par une entité de ce réseau distincte de ladite entité serveuse et dite entité cible, en vue de déterminer si un transfert demandé vers cette cellule cible s'avère possible, ladite cellule cible étant dite cellule rejetée dans le cas où un tel transfert ne s'avère pas possible, ladite entité serveuse informe ladite entité cible de paramètres utiles pour fixer les conditions dans lesquelles ladite cellule cible est à considérer comme une cellule rejetée.

Suivant une autre caractéristique, lesdits paramètres comportent des paramètres utiles pour fixer une durée prédéterminée pendant laquelle une telle demande de transfert peut si nécessaire être réitérée.

Suivant une autre caractéristique, lesdits paramètres comportent des paramètres relatifs à la nature, entrante ou sortante, de la communication.

Un autre objet de la présente invention consiste en une entité de contrôle de cellules pour réseau cellulaire de radiocommunications mobiles, notamment BSC pour un réseau tel qu'un réseau du type GSM, pour la mise en oeuvre d'un tel procédé.

D'autres objets et caractéristiques de la présente invention apparaîtront à la lecture de la description suivante d'un exemple de réalisation, faite en relation avec les dessins ci-annexés dans lesquels:
- la figure 1 rappelle schématiquement l'organisation d'un réseau cellulaire de radiocommunications mobiles tel que notamment le réseau GSM,
- la figure 2 est un diagramme rappelant les différents messages échangés entre différentes entités d'un tel réseau lors d'une demande de transfert externe, dans le cas où un tel transfert s'avère possible,
- la figure 3 est un diagramme rappelant les différents messages échangés entre différentes entités d'un tel réseau lors d'une demande de transfert externe, dans le cas où un tel transfert ne s'avère pas possible,
- la figure 4 est un diagramme destiné à illustrer un exemple de procédé de coopération suivant l'invention,

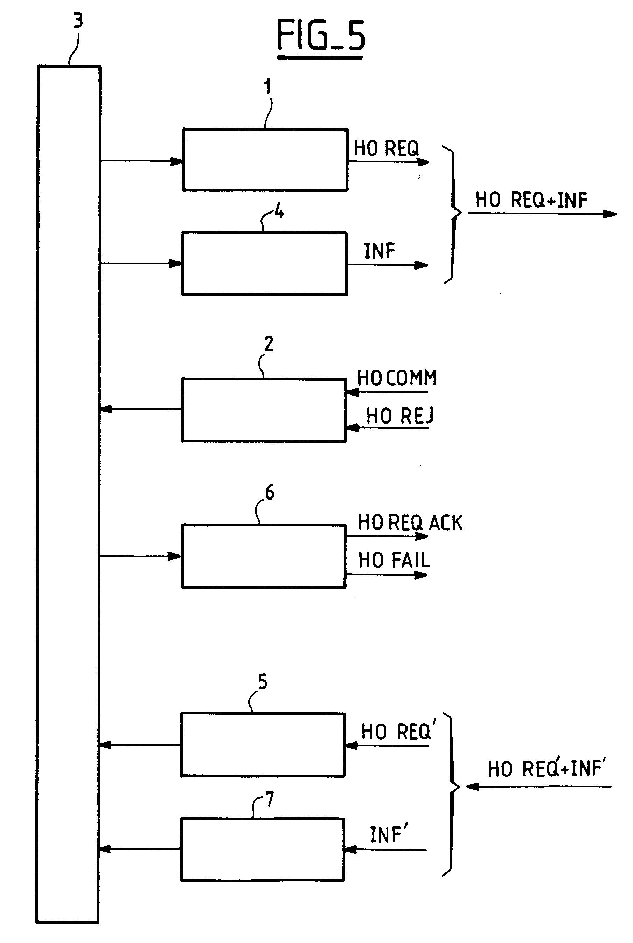

- la figure 5 illustre de manière schématique un exemple de moyens à mettre en oeuvre selon l'invention dans une entité de contrôle de cellules pour réseau cellulaire de radiocommunications mobiles (notamment BSC pour un réseau du type GSM).

La présente invention concerne donc un procédé de coopération entre entités d'un réseau cellulaire de radiocommunications mobiles, pour l'allocation de ressources radio lors de transferts de communications inter-cellulaires.

Suivant l'invention, pour améliorer la coopération entre entités du réseau, lors d'une demande de transfert de communication d'une cellule dite cellule serveuse contrôlée par une entité de ce réseau dite entité serveuse, vers une cellule dite cellule cible, contrôlée par une entité de ce réseau distincte de ladite entité serveuse et dite entité cible, en vue de déterminer si un transfert demandé vers cette cellule cible s'avère possible, ladite cellule cible étant dite cellule rejetée dans le cas où un tel transfert ne s'avère pas possible, ladite entité serveuse informe ladite entité cible de paramètres utiles pour fixer les conditions dans lesquelles ladite cellule cible est à considérer comme une cellule rejetée.

Dans l'exemple de réalisation décrit en relation avec les figures 4 et 5, ladite information quant à des paramètres utiles pour fixer les conditions dans lesquelles une cellule cible est à considérer comme une cellule rejetée est transmise de l'entité serveuse BSCs à l'entité cible BSCc, via l'entité MSC (ou entité de niveau supérieur), assurant la liaison entre cette entité serveuse et cette entité cible.

Ainsi, sur le diagramme de la figure 4, une telle information, notée INF, est associée au message HO REQ transmis au MSC par le BSC serveur BSCs suivant la procédure rappelée plus haut en relation avec les figures 2 et 3.

De même, cette information est retransmise par le MSC au BSC cible BSCc, étant alors notée INF' et étant également, dans l'exemple illustré, associée au message correspondant HO REQ' retransmis par le MSC au BSC cible BSCc.

Il serait aussi possible, suivant un autre exemple de réalisation, non illustré spécifiquement, que chaque entité cible soit informée de paramètres utiles pour fixer les conditions dans lesquelles une cellule cible est à considérer comme cellule rejetée, non par l'entité serveuse actuelle mais par l'entité MSC. Un tel exemple de réalisation correspond notamment au cas où l'entité serveuse actuelle transmet au MSC la liste des cellules candidates, et où le MSC effectue lui-même successivement les demandes de transfert correspondantes.

La figure 5 illustre de manière schématique le type de moyens à mettre en oeuvre selon un exemple de réalisation de l'invention, dans une entité de contrôle de cellules pour réseau cellulaire de radiocommunications mobiles, notamment dans l'entité appelée BSC pour un réseau de type GSM.

De manière connue, et par conséquent non redécrite ici dans le détail, une telle entité BSC comporte, pour le cas de cellule contrôlée constituée par une cellule serveuse, des moyens 1 d'émission de message de demande de transfert vers une cellule cible (message HO REQ), et des moyens 2 de réception de messages obtenus en réponse à une telle demande (messages HO COMM, HO REJ), ces moyens 1 et 2 fonctionnant de manière connue en liaison avec des moyens 3 de gestion de ressources radio.

Suivant l'exemple illustré, cette entité BSC comporte en outre, pour le cas de cellule contrôlée constituée par une cellule serveuse, des moyens 4 pour émettre une information INF quant à des paramètres utiles pour fixer les conditions dans lesquelles une cellule cible est à considérer comme une cellule rejetée. Dans l'exemple illustré, l'information INF est transmise associée au message HO REQ de demande de transfert.

Les moyens 4 reçoivent pour cela une information, fournie par les moyens 3 de gestion de ressources radio, quant à des paramètres utiles pour fixer les conditions dans lesquelles une cellule cible est à considérer comme une cellule rejetée, et mettent l'information ainsi reçue dans une forme appropriée pour sa transmission vers l'entité MSC, de manière à constituer l'information INF.

Egalement de manière connue, et par conséquent non redécrite ici dans le détail, une telle entité BSC comporte, pour le cas de cellule contrôlée constituée par une cellule cible, des moyens 5 de réception de messages de demande de transfert (messages HO REQ'), et des moyens 6 d'émission, soit de message d'accusé de réception de requête de "handover" (message HO REQ ACK), soit de message indiquant une impossibilité d'effectuer un transfert vers cette cellule cible (message HO FAIL), ces moyens 5 et 6 fonctionnant, également de manière connue, en liaison avec les moyens 3 de gestion de ressources radio.

Suivant l'exemple illustré, cette entité BSC comporte en outre, pour le cas de cellule contrôlée constituée par une cellule cible, des moyens 7 pour recevoir une information telle que INF' quant à des paramètres utiles pour fixer les conditions dans lesquelles une cellule cible est à considérer comme une cellule rejetée. Dans l'exemple illustré, cette information INF' est reçue associée au message HO REQ' de demande de transfert.

Les moyens 3 de gestion de ressources radio sont commandés par les moyens 7, de manière à fixer, dans ces moyens 3, les conditions dans lesquelles une cellule cible est à considérer comme une cellule rejetée.

Les moyens 1 d'émission de messages de demande de transfert (messages REQ) et les moyens 2 de réception de messages obtenus en réponse à une telle demande (messages HO REJ, HO COMM), ainsi que les moyens 4 de réception de messages de demande de transfert (messages HO REQ'), et les moyens 5 d'émission, soit de message d'accusé de réception de requête de "handover" (message HO REQ ACK), soit de message indiquant une impossibilité d'effectuer un transfert vers une cellule cible (message HO FAIL), de même que les moyens 3 de gestion de ressources radio (pour ce qui est de leurs fonctions autres que celles se rapportant à la présente invention), peuvent être des moyens classiques, qui ne nécessitent donc pas d'être redécrits ici.

La réalisation particulière des moyens 4 pour émettre une information INF quant à des paramètres utiles pour fixer les conditions dans lesquelles une cellule cible est à considérer comme une cellule rejetée, des moyens 7 pour recevoir une information correspondante INF', et des fonctions particulières des moyens 3 de gestion de ressources radio se rapportant à la présente invention, de manière à faire fonctionner l'ensemble selon le procédé ainsi décrit dans cet exemple, ne présentant pas de difficulté particulière pour l'homme du métier, ne nécessitent pas non plus de description spécifique.

On comprendra en outre que l'invention n'est pas limitée à l'exemple de réalisation décrit, et qu'elle permet d'une manière générale d'améliorer la coopération entre entités d'un réseau cellulaire de radiocommunications mobiles, dans le cas de transferts de communication inter-cellulaires dits externes.

## Revendications

1. Procédé de coopération entre entités d'un réseau cellulaire de radiocommunications mobiles, pour l'allocation de ressources radio lors de transferts de communications inter-cellulaires, caractérisé en ce que, lors d'une demande de transfert de communication d'une cellule dite cellule serveuse contrôlée par une entité de ce réseau dite entité serveuse (BSCs), vers une cellule dite cellule cible contrôlée par une entité de ce réseau distincte de ladite entité serveuse et dite entité cible (BSCc), en vue de déterminer si un transfert vers cette cellule cible s'avère possible, ladite cellule cible étant dite cellule rejetée dans le cas où un tel transfert ne s'avère pas possible, ladite entité serveuse informe (INF, INF') ladite entité cible de paramètres utiles pour fixer les conditions dans lesquelles ladite cellule cible est à considérer comme une cellule rejetée.

2. Procédé selon la revendication 1, caractérisé en ce que lesdits paramètres comportent des paramètres relatifs à une durée prédéterminée pendant laquelle une telle demande de transfert peut, si nécessaire, être réitérée.

3. Procédé selon la revendication 1, caractérisé en ce que lesdits paramètres comportent des paramètres relatifs à la nature, entrante ou sortante, de la communication.

4. Entité (BSC) de contrôle de cellules pour réseau cellulaire de radiocommunications mobiles, pour la mise en oeuvre du procédé selon l'une des revendications 1 à 3, caractérisée en ce qu'elle comporte:
- des moyens (4) d'émission d'une information (INF) quant à des paramètres utiles pour fixer les conditions dans lesquelles une cellule cible est à considérer comme une cellule rejetée, dans le cas où cette entité est entité serveuse,
- des moyens (7) de réception d'une information (INF') quant à des paramètres utiles pour fixer les conditions dans lesquelles une cellule cible est à considérer comme une cellule rejetée, dans le cas où cette entité est entité cible.
